# EUROPEAN PATENT APPLICATION

(11) **EP 4 130 128 A1**
(43) Date of publication of application: **08.02.2023**
(21) Application number: 21775917.4
(22) Date of filing: 25.03.2021
(51) Int. Cl.: C08K 5/098, C08K 5/20, C08K 5/521, C08K 5/527, C08L 23/00, C08L 23/02, C08L 23/10

(54) **NUCLEATING AGENT, RESIN COMPOSITION, METHOD FOR PRODUCING RESIN COMPOSITION, AND MOLDED ARTICLE**

(30) Priority: 27.03.2020 JP 2020058942; 24.11.2020 JP 2020194374
(71) Applicant: ADEKA CORPORATION, Arakawa-ku Tokyo 116-8554 (JP)
(72) Inventor: MATSUMOTO, Yuji, Saitama-shi, Saitama 336-0022 (JP); UEDA, Naoto, Saitama-shi, Saitama 336-0022 (JP); MASAI, Shogo, Saitama-shi, Saitama 336-0022 (JP)
(74) Representative: Gill Jennings & Every LLP
(86) International application number: PCT/JP2021/012754
(87) International publication number: WO 2021/193886

(57) **Abstract**

Provided are: a nucleating agent capable of imparting excellent mechanical properties to a molded article; a resin composition; a method of producing a resin composition; and a molded article. The nucleating agent contains: (A) an aromatic phosphate metal salt having a structure represented by Formula (1) (wherein, R¹ to R⁵ each independently represent a hydrogen atom or an alkyl group; n represents 1 or 2; when n is 1, M¹ represents an alkali metal or dihydroxyaluminum; and when n is 2, M¹ represents an alkaline earth metal, zinc, or hydroxyaluminum); and (B) a carboxylic acid metal salt having a structure represented by Formula (2) (wherein, M² represents an alkali metal, an alkaline earth metal, hydroxyaluminum, or dihydroxyaluminum; a represents 1 or 2; x represents 1 or 2; a and x satisfy ax = 2; and Z represents a group having a structure represented by Formula (3) or (4)).

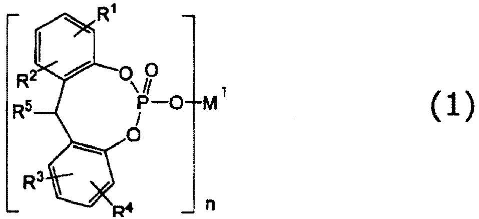

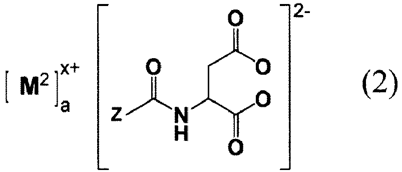

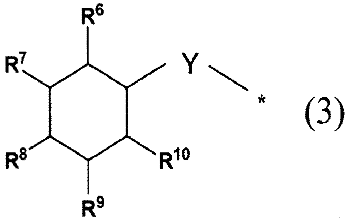

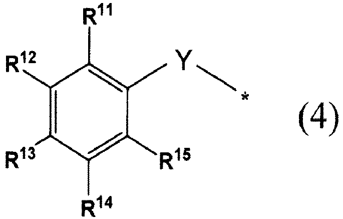

## Description

### TECHNICAL FIELD

The present invention relates to: a nucleating agent; a resin composition; a method of producing a resin composition (hereinafter, also simply referred to as "production method"); and a molded article. More particularly, the present invention relates to: a nucleating agent capable of imparting excellent mechanical properties to a molded article; a resin composition; a method of producing a resin composition; and a molded article.

### BACKGROUND ART

As one of the plastic materials having the broadest application field among various general thermoplastic resins, polyolefin-based resins are used in a wide range of applications because of their physical properties, moldability, cost, and the like.

A molded article formed from a polyolefin-based resin is demanded to have excellent rigidity in some cases. As a method of imparting excellent rigidity to a molded article formed from a polyolefin-based resin, a method of adding a nucleating agent to the polyolefin-based resin is known. As a nucleating agent to be added to a polyolefin-based resin, for example, Patent Document 1 proposes a nucleating agent that contains an aromatic phosphate metal salt.

### RELATED ART DOCUMENT

### PATENT DOCUMENT

[Patent Document 1] JPS58-1736A

### SUMMARY OF THE INVENTION

### PROBLEMS TO BE SOLVED BY THE INVENTION

However, the nucleating agent disclosed in Patent Document 1 has room for further improvement in terms of imparting sufficient mechanical properties to a molded article.

In view of the above, an object of the present invention is to provide: a nucleating agent capable of imparting excellent mechanical properties to a molded article; a resin composition; a method of producing a resin composition; and a molded article.

### MEANS FOR SOLVING THE PROBLEMS

The present inventors intensively studied to discover that the above-described problem can be solved by a nucleating agent containing a specific aromatic phosphate metal salt and a specific carboxylic acid metal salt, thereby completing the present invention.

That is, the nucleating agent of the present invention is characterized by containing:
(A) an aromatic phosphate metal salt having a structure represented by the following Formula (1): 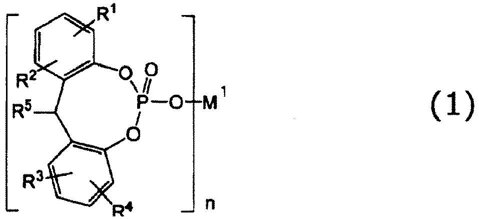 (wherein, R¹ to R⁵ each independently represent a hydrogen atom or an alkyl group having 1 to 6 carbon atoms; n represents 1 or 2; when n is 1, M¹ represents an alkali metal or dihydroxyaluminum; and when n is 2, M¹ represents an alkaline earth metal, zinc, or hydroxyaluminum); and
(B) a carboxylic acid metal salt having a structure represented by the following Formula (2): 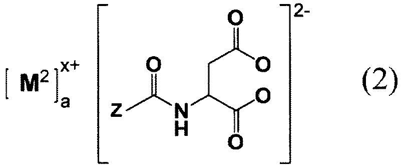 (wherein, M² represents an alkali metal, an alkaline earth metal, hydroxyaluminum, or dihydroxyaluminum; a represents 1 or 2; x represents 1 or 2; a and x satisfy ax = 2; and Z represents a group having a structure represented by the following Formula (3) or (4)) 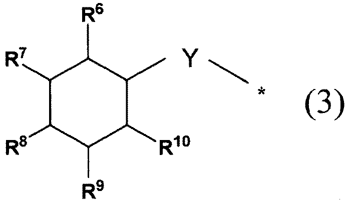 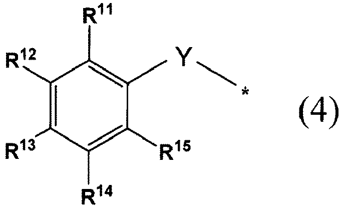 (wherein, Y represents a direct bond or an alkylene group having 1 to 4 carbon atoms; R⁶ to R¹⁵ each independently represent a hydrogen atom, a halogen atom, or an alkyl group having 1 to 6 carbon atoms; and * represents a binding position with a carbonyl carbon atom).

In Formula (2), M² is preferably sodium.

Further, a mass ratio (A)/(B) between the content of the (A) aromatic phosphate metal salt and the content of the (B) carboxylic acid metal salt is preferably 1/99 to 50/50.

Still further, the mass ratio (A)/(B) between the content of the (A) aromatic phosphate metal salt and the content of the (B) carboxylic acid metal salt is preferably 50/50 to 99/1, more preferably 50/50 to 80/20.

The resin composition of the present invention contains:
a polyolefin-based resin;
(A) an aromatic phosphate metal salt having a structure represented by the following Formula (1): 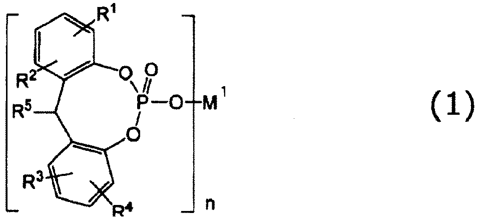 (wherein, R¹ to R⁵ each independently represent a hydrogen atom or an alkyl group having 1 to 6 carbon atoms; n represents 1 or 2; when n is 1, M¹ represents an alkali metal or dihydroxyaluminum; and when n is 2, M¹ represents an alkaline earth metal, zinc, or hydroxyaluminum); and
(B) a carboxylic acid metal salt having a structure represented by the following Formula (2): 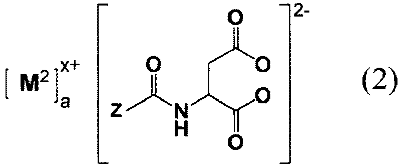 (wherein, M² represents an alkali metal, an alkaline earth metal, hydroxyaluminum, or dihydroxyaluminum; a represents 1 or 2; x represents 1 or 2; a and x satisfy ax = 2; and Z represents a group having a structure represented by the following Formula (3) or (4)) 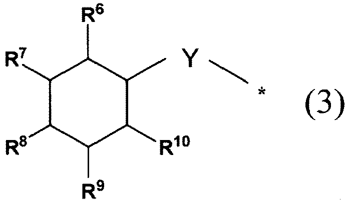 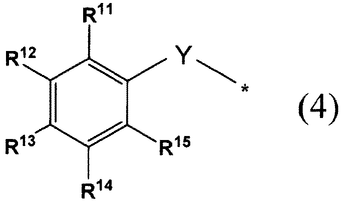 (wherein, Y represents a direct bond or an alkylene group having 1 to 4 carbon atoms; R⁶ to R¹⁵ each independently represent a hydrogen atom, a halogen atom, or an alkyl group having 1 to 6 carbon atoms; and * represents a binding position with a carbonyl carbon atom).

The resin composition of the present invention is characterized in that a total content of the (A) aromatic phosphate metal salt and the (B) carboxylic acid metal salt is 0.001 to 10 parts by mass with respect to 100 parts by mass of the polyolefin-based resin.

The polyolefin-based resin is preferably a polypropylene-based resin.

The method of producing a resin composition according to the present invention is characterized by including a blending step of blending the above-described nucleating agent into a polyolefin-based resin.

Further, the molded article of the present invention is characterized in that it is obtained by molding the above-described resin composition.

### EFFECTS OF THE INVENTION

According to the present invention, the followings can be provided: a nucleating agent capable of imparting excellent mechanical properties to a molded article; a resin composition; a method of producing a resin composition; and a molded article.

### MODE FOR CARRYING OUT THE INVENTION

Embodiments of the present invention will now be described in detail. First, an embodiment of the nucleating agent of the present invention will be described.

### <Nucleating Agent>

The nucleating agent according to the present embodiment contains: (A) an aromatic phosphate metal salt having a structure represented by the following Formula (1); and (B) a carboxylic acid metal salt having a structure represented by the following Formula (2).

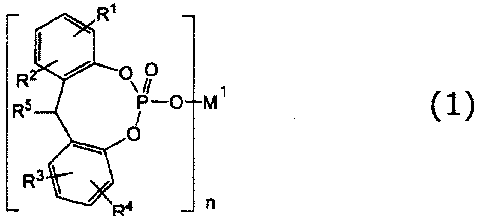

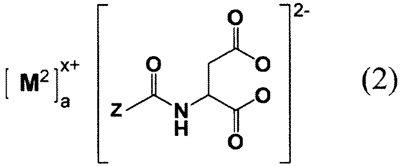

In Formula (1), R¹ to R⁵ each independently represent a hydrogen atom or an alkyl group having 1 to 6 carbon atoms; n represents 1 or 2; when n is 1, M¹ represents an alkali metal or dihydroxyaluminum; and when n is 2, M¹ represents an alkaline earth metal, zinc, or hydroxyaluminum. In Formula (2), M² represents an alkali metal, an alkaline earth metal, hydroxyaluminum, or dihydroxyaluminum; a represents 1 or 2; x represents 1 or 2; a and x satisfy ax = 2; and Z represents a group having a structure represented by the following Formula (3) or (4).

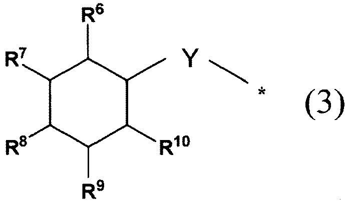

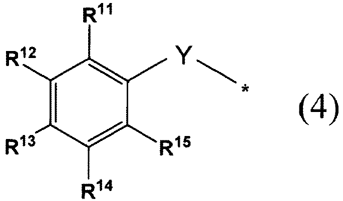

In Formulae (3) and (4), Y represents a direct bond or an alkylene group having 1 to 4 carbon atoms; R⁶ to R¹⁵ each independently represent a hydrogen atom, a halogen atom, or an alkyl group having 1 to 6 carbon atoms; and * represents a binding position with a carbonyl carbon atom.

The nucleating agent according to the present embodiment can impart excellent mechanical properties to a molded article.

The (A) aromatic phosphate metal salt has a structure represented by the above-described Formula (1). In Formula (1), specific examples of M¹ include lithium, sodium, potassium, magnesium, calcium, barium, hydroxyaluminum, dihydroxyaluminum, and zinc. From the standpoint of imparting superior mechanical properties to a molded article, M¹ is preferably lithium, sodium, hydroxyaluminum, or dihydroxyaluminum, particularly preferably sodium. Further, n in Formula (1) is preferably 1.

Examples of the alkyl group having 1 to 6 carbon atoms that is represented by R¹ to R⁵ in Formula (1) include a methyl group, an ethyl group, an *n*-propyl group, an isopropyl group, a cyclopropyl group, an *n*-butyl group, a *sec*-butyl group, a *tert*-butyl group, an isobutyl group, a cyclobutyl group, an *n*-amyl group, a *tert*-amyl group, a cyclopentyl group, an *n*-hexyl group, and a cyclohexyl group. From the standpoint of imparting superior mechanical properties to a molded article, R¹ to R⁴ are preferably *tert*-butyl groups. Further, from the standpoint of imparting superior mechanical properties to a molded article, R⁵ is preferably a hydrogen atom or a methyl group, particularly preferably a hydrogen atom.

Specific examples of the (A) aromatic phosphate metal salt include the followings. The following aromatic phosphate metal salts may be contained singly, or in combination of two or more thereof. It is noted here, however, that the (A) aromatic phosphate metal salt is not limited to the followings.

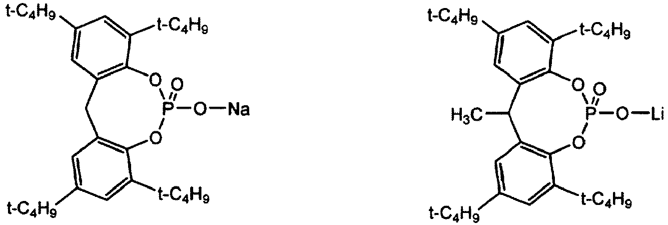

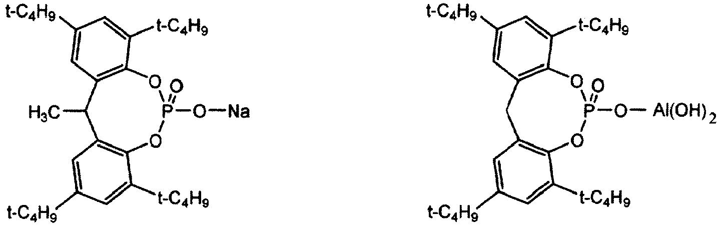

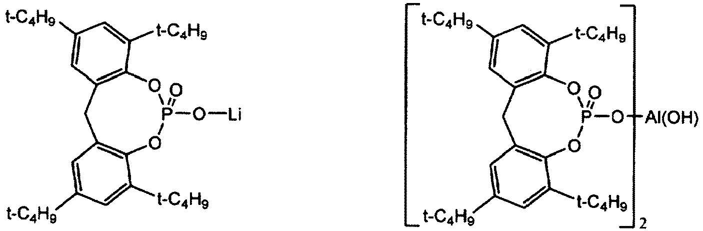

The (B) carboxylic acid metal salt has a structure represented by the above-described Formula (2). In Formula (2), specific examples of M² include lithium, sodium, potassium, magnesium, calcium, barium, hydroxyaluminum, and dihydroxyaluminum. From the standpoint of imparting superior mechanical properties to a molded article, M² is preferably sodium, calcium, hydroxyaluminum, or dihydroxyaluminum, more preferably sodium or hydroxyaluminum, particularly preferably sodium. Further, in Formula (2), x and a are preferably 1 and 2, respectively.

In Formula (2), Z is preferably a group having a structure represented by Formula (4). In this case, superior mechanical properties can be imparted to a molded article.

Examples of the alkylene group having 1 to 4 carbon atoms that is represented by Y in Formulae (3) and (4) include a methylene group, an ethylene group, a propylene group, a butylene group, and an isobutylene group. From the standpoint of imparting superior mechanical properties to a molded article, Y is preferably a direct bond or a methylene group, more preferably a direct bond.

Examples of the halogen atom represented by R⁶ to R¹⁵ in Formulae (3) and (4) include fluorine, chlorine, bromine, and iodine. Thereamong, from the standpoint of imparting superior mechanical properties to a molded article, chlorine is particularly preferred.

Examples of the alkyl group having 1 to 6 carbon atoms that is represented by R⁶ to R¹⁵ in Formulae (3) and (4) include linear or branched alkyl groups, and cycloalkyl groups having 3 to 6 carbon atoms. Specific example of the alkyl group having 1 to 6 carbon atoms include a methyl group, an ethyl group, an *n*-propyl group, an isopropyl group, a cyclopropyl group, an *n*-butyl group, a *sec*-butyl group, a *tert*-butyl group, an isobutyl group, a cyclobutyl group, an *n*-amyl group, a *tert*-amyl group, a cyclopentyl group, an *n*-hexyl group, and a cyclohexyl group.

From the standpoint of imparting superior mechanical properties to a molded article, R⁶ to R¹⁵ in Formulae (3) and (4) are each preferably a hydrogen atom or a halogen atom, particularly preferably a hydrogen atom.

Specific examples of the (B) carboxylic acid metal salt include the followings. The following carboxylic acid metal salts may be contained singly, or in combination of two or more thereof. It is noted here, however, that the (B) carboxylic acid metal salt is not limited to the followings.

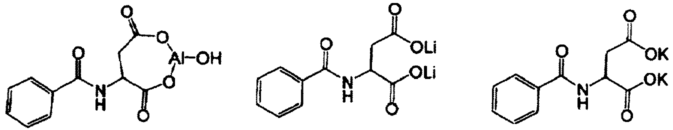

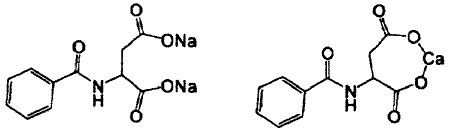

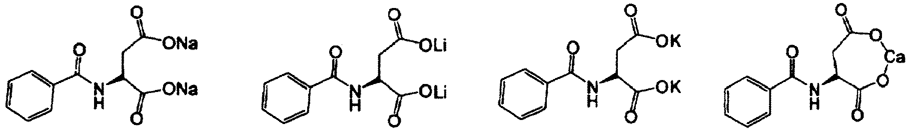

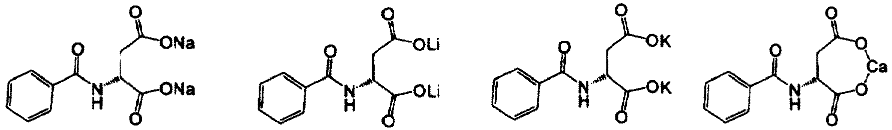

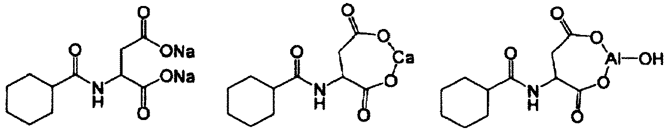

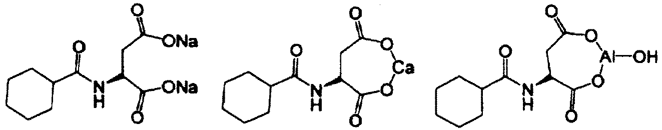

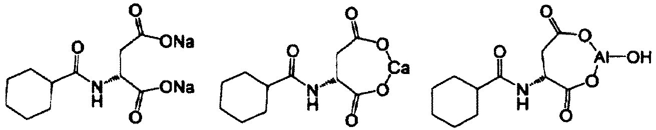

The (B) carboxylic acid metal salt can be produced by, for example, a method of allowing aspartic acid and a carboxylic acid chloride, such as benzoic acid chloride or cyclohexane carboxylic acid chloride, to react with each other in the presence of a base such as sodium hydroxide.

In the nucleating agent according to the present embodiment, a mass ratio (A)/(B) between the content of the (A) aromatic phosphate metal salt and the content of the (B) carboxylic acid metal salt may be, for example, 1/99 to 99/1. The mass ratio (A)/(B) is preferably 1/99 to 50/50. In this case, the nucleating agent can impart excellent impact resistance to a molded article. From the standpoint of obtaining a molded article that has not only excellent impact resistance but also sufficient rigidity, the mass ratio (A)/(B) is more preferably 1/99 to 20/80, still more preferably 4/96 to 20/80, yet still more preferably 4/96 to 16/84.

Further, in the nucleating agent according to the present embodiment, the mass ratio (A)/(B) is also preferably 50/50 to 99/1. In this case, the nucleating agent can impart a superior rigidity to a molded article. From the standpoint of imparting a superior rigidity to a molded article, the mass ratio (A)/(B) is more preferably 50/50 to 96/4, still more preferably 50/50 to 84/16, yet still more preferably 50/50 to 80/20, particularly preferably 60/40 to 80/20.

The nucleating agent according to the present embodiment may further contain (C) a fatty acid metal salt. In this case, the dispersibility of the (A) aromatic phosphate metal salt and the (B) carboxylic acid metal salt is improved, so that the nucleating agent can impart superior mechanical properties to a molded article.

Examples of the (C) fatty acid metal salt include metal salts of fatty acids having 12 to 20 carbon atoms that contain a linear or branched fatty acid residue. Examples of a metal ion constituting the fatty acid metal salt include a sodium ion, a potassium ion, a lithium ion, a dihydroxyaluminum ion, a calcium ion, a zinc ion, a barium ion, a magnesium ion, and a hydroxyaluminum ion, among which a sodium ion, a potassium ion, a lithium ion, or a calcium ion is particularly preferred.

Specific examples of the (C) fatty acid metal salt include sodium laurate, sodium myristate, sodium palmitate, sodium stearate, sodium oleate, sodium linoleate, sodium linolenate, sodium arachidate, sodium 12-hydroxystearate, potassium laurate, potassium myristate, potassium palmitate, potassium stearate, potassium oleate, potassium linoleate, potassium linolenate, potassium arachidate, potassium 12-hydroxystearate, lithium laurate, lithium myristate, lithium palmitate, lithium stearate, lithium oleate, lithium linoleate, lithium linolenate, lithium arachidate, lithium 12-hydroxystearate, calcium laurate, calcium myristate, calcium palmitate, calcium stearate, calcium oleate, calcium linoleate, calcium linolenate, calcium arachidate, and calcium 12-hydroxystearate. Thereamong, sodium myristate, sodium stearate, sodium 12-hydroxystearate, lithium myristate, lithium stearate, lithium 12-hydroxystearate, calcium myristate, calcium stearate, and calcium 12-hydroxystearate are preferred; lithium myristate, lithium stearate, lithium 12-hydroxystearate, calcium myristate, calcium stearate, and calcium 12-hydroxystearate are more preferred; and lithium myristate, lithium stearate, and lithium 12-hydroxystearate are still more preferred.

When the nucleating agent according to the present embodiment contains the (C) fatty acid metal salt, the content of the (C) fatty acid metal salt may be, for example, 10 to 150 parts by mass with respect to a total of 100 parts by mass of the content of the (A) aromatic phosphate metal salt and the content of the (B) carboxylic acid metal salt, and it is preferably 30 to 120 parts by mass, more preferably 50 to 100 parts by mass.

The nucleating agent according to the present embodiment may further contain, as required, various additives such as a compound that is different from the (A) aromatic phosphate metal salt and the (B) carboxylic acid metal salt and has a function of facilitating the crystallization of a polyolefin-based resin, a phenolic antioxidant, a phosphorus-based antioxidant, a sulfur-based antioxidant, other antioxidant, a hindered amine compound, an ultraviolet absorber, a flame retardant, a flame retardant aid, a lubricant, a filler, a hydrotalcite, an antistatic agent, a fluorescent brightener, a pigment, and a dye.

Examples of the compound that is different from the (A) aromatic phosphate metal salt and the (B) carboxylic acid metal salt and has a function of facilitating the crystallization of a polyolefin-based resin include: carboxylic acid metal salts, such as sodium benzoate, 4-*tert*-butylbenzoate aluminum salt, sodium adipate, 2-sodium-bicyclo[2.2.1]heptane-2,3-dicarboxylate, and calcium cyclohexane-1,2-dicarboxylate; polyol derivatives, such as dibenzylidene sorbitol, bis(methylbenzylidene)sorbitol, bis(3,4-dimethylbenzylidene)sorbitol, bis(*p*-ethylbenzylidene)sorbitol, bis(dimethylbenzylidene)sorbitol, and 1,2,3-trideoxy-4,6:5,7-o-bis(4-propylbenzylidene)nonitol; and amide compounds, such as *N*,*N*',*N*"-tris[2-methylcyclohexyl]-1,2,3-propane tricarboxamide,*N*,*N*',*N*"-tricyclohexyl-1,3,5-benzene tricarboxamide, *N*,*N*'-dicyclohexylnaphthalene dicarboxamide, and 1,3,5-tri(dimethylisopropoylamino)benzene.

Examples of the phenolic antioxidant include 2,6-di-*tert*-butyl-4-ethylphenol, *2-tert-*butyl-4,6-dimethylphenol, styrenated phenol, 2,2'-methylene-bis(4-ethyl-6-*tert*-butylphenol), 2,2'-thiobis-(6-*tert*-butyl-4-methylphenol), 2,2'-thiodiethylene-bis[3-(3,5-di-*tert*-butyl-4-hydroxyphenyl)propionate], 2-methyl-4,6-bis(octylsulfanylmethyl)phenol, 2,2'-isobutylidene-bis(4,6-dimethylphenol), isooctyl-3-(3,5-di-*tert*-butyl-4-hydroxyphenyl)propionate, *N*,*N*'-hexane-1,6-diylbis[3-(3,5-di-*tert*-butyl-4-hydroxyphenyl)propionamide], 2,2'-oxamide-bis[ethyl-3-(3,5-di-*tert*-butyl-4-hydroxyphenyl)propionate], 2-ethylhexyl-3-(3',5'-di-*tert-*butyl-4'-hydroxyphenyl)propionate, 2,2'-ethylene-bis(4,6-di-*tert*-butylphenol), esters of 3,5-di-*tert*-butyl-4-hydroxybenzene propanoic acid and a C13-15 alkyl, 2,5-di-*tert-*amylhydroquinone, hindered phenol polymers (e.g., trade name "AO.OH.98" manufactured by ADEKA Polymer Additives Europe SAS), 2,2'-methylene-bis[6-(1-methylcyclohexyl)-*p-*cresol], 2-*tert*-butyl-6-(3-*tert*-butyl-2-hydroxy-5-methylbenzyl)-4-methylphenyl acrylate, 2-[1-(2-hydroxy-3,5-di-*tert*-pentylphenyl)ethyl]-4,6-di-tert-pentylphenyl acrylate, 6-[3-(3-*tert-*butyl-4-hydroxy-5-methyl)propoxy]-2,4,8,10-tetra-*tert*-butylbenzo[*d*,*f*[1,3,2]-dioxaphosphepin, hexamethylene-bis[3-(3,5-di-*tert*-butyl-4-hydroxyphenyl)propionate], calcium bis[monoethyl(3,5-di-*tert*-butyl-4-hydroxybenzyl)phosphonate], a reaction product between 5,7-bis(1,1-dimethylethyl)-3-hydroxy-2(3*H*)-benzofuranone and *o*-xylene, 2,6-di-*tert*-butyl-4-(4,6-bis(octylthio)-1,3,5-triazine-2-ylamino)phenol, DL-a-tocophenol (vitamin E), 2,6-bis(*α-met*hylbenzyl)-4-methylphenol, bis[3,3-bis-(4'-hydroxy-3'-*tert*-butyl-phenyl)butanoic acid]glycol ester, 2,6-di-*tert*-butyl-*p*-cresol, 2,6-diphenyl-4-octadecyloxyphenol, stearyl(3,5-di-*tert*-butyl-4-hydroxyphenyl)propionate, distearyl(3,5-di-*tert*-butyl-4-hydroxybenzyl)phosphonate, tridecyl-3,5-*tert*-butyl-4-hydroxybenzyl thioacetate, thiodiethylene-bis[(3,5-di-*tert*-butyl-4-hydroxyphenyl)propionate], 4,4'-thiobis(6-*tert*-butyl-*m*-cresol), 2-octylthio-4,6-di(3,5-di-*tert*-butyl-4-hydroxyphenoxy)-s-triazine, 2,2'-methylene-bis(4-methyl-6-*tert*-butylphenol), bis[3,3-bis(4-hydroxy-3-*tert*-butylphenyl)butyric acid]glycol ester, 4,4'-butylidene-bis(2,6-di-*tert*-butylphenol), 4,4'-butylidene-bis(6-*tert*-butyl-3-methylphenol), 2,2'-ethylidene-bis(4,6-di-*tert*-butylphenol), 1,1,3-tris(2-methyl-4-hydroxy-5-*tert*-butylphenyl)butane, bis[2-*tert*-butyl-4-methyl-6-(2-hydroxy-3-tert-butyl-5-methylbenzyl)phenyl]terephthalate, 1,3,5-tris(2,6-dimethyl-3-hydroxy-4-*tert-*butylbenzyl)isocyanurate, 1,3,5-tris(3,5-di-*tert*-butyl-4-hydroxybenzyl)isocyanurate, 1,3,5-tris(3,5-di-*tert*-butyl-4-hydroxybenzyl)-2,4,6-trimethylbenzene, 1,3,5-tris[(3,5-di-*tert*-butyl-4-hydroxyphenyl)propionyloxyethyl]isocyanurate, tetrakis[methylene-3-(3',5'-*tert*-butyl-4'-hydroxyphenyl)propionate]methane, 2-*tert*-butyl-4-methyl-6-(2-acryloyloxy-3-*tert*-butyl-5-methylbenzyl)phenol, 3,9-bis[2-(3-*tert*-butyl-4-hydroxy-5-methylhydrocinnamoyloxy)-1,1-dimethylethyl]-2,4,8,10-tetraoxaspiro[5.5]undecane, triethylene glycol-bis[*β*-(3-*tert*-butyl-4-hydroxy-5-methylphenyl)propionate], and 3-(3,5-dialkyl-4-hydroxyphenyl)propionic acid derivatives, such as stearyl-3-(3,5-di-*tert*-butyl-4-hydroxyphenyl)propionic acid amide, palmityl-3-(3,5-di-*tert*-butyl-4-hydroxyphenyl)propionic acid amide, myristyl-3-(3,5-di-*tert-*butyl-4-hydroxyphenyl)propionic acid amide, and lauryl-3-(3,5-di-*tert*-butyl-4-hydroxyphenyl)propionic acid amide.

Examples of the phosphorus-based antioxidant include triphenyl phosphite, diisooctyl phosphite, heptakis(dipropylene glycol) triphosphite, triisodecyl phosphite, diphenyl isooctyl phosphite, diisooctyl phenyl phosphite, diphenyl tridecyl phosphite, triisooctyl phosphite, trilauryl phosphite, diphenyl phosphite, tris(dipropylene glycol) phosphite, dioleyl hydrogen phosphite, trilauryl trithiophosphite, bis(tridecyl) phosphite, tris(isodecyl) phosphite, tris(tridecyl) phosphite, diphenyl decyl phosphite, dinonyl phenyl-bis(nonylphenyl) phosphite, poly(dipropylene glycol)phenyl phosphite, tetraphenyl dipropylene glycol diphosphite, trisnonyl phenyl phosphite, tris(2,4-di-*tert*-butylphenyl) phosphite, tris(2,4-di-*tert*-butyl-5-methylphenyl) phosphite, tris[2-*tert*-butyl-4-(3-*tert*-butyl-4-hydroxy-5-methylphenylthio)-5-methylphenyl]phosphite, tri(decyl) phosphite, octyl diphenyl phosphite, di(decyl)monophenyl phosphite, mixtures of distearyl pentaerythritol and calcium stearate, alkyl(C10) bisphenol-A phosphite, tetraphenyl-tetra(tridecyl)pentaerythritol tetraphosphite, bis(2,4-di-*tert*-butyl-6-methylphenyl)ethyl phosphite, tetra(tridecyl)isopropylidene diphenol diphosphite, tetra(tridecyl)-4,4'-*n*-butylidene-bis(2-*tert-*butyl-5-methylphenol) diphosphite, hexa(tridecyl)-1,1,3-tris(2-methyl-4-hydroxy-5-*tert-*butylphenyl)butane triphosphite, tetrakis(2,4-di-*tert*-butylphenyl)biphenylene diphosphonite, 9,10-dihydro-9-oxa-10-phosphaphenanthrene-10-oxide, (1-methyl-1-propenyl-3-ylidene)tris(1,1-dimethylethyl)-5-methyl-4,1-phenylene)hexatridecyl phosphite, 2,2'-methylene-bis(4,6-di-*tert*-butylphenyl)-2-ethylhexyl phosphite, 2,2'-methylene-bis(4,6-di-*tert-*butylphenyl)-octadecyl phosphite, 2,2'-ethylidene-bis(4,6-di-*tert*-butylphenyl) fluorophosphite, 4,4'-butylidene-bis(3-methyl-6-*tert*-butylphenylditridecyl) phosphite, tris(2-[(2,4,8,10-tetrakis-*tert*-butyldibenzo[*d*,*f*][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-*tert-*butylphenyl-2-butyl-2-ethyl-1,3-propanediol phosphite, poly-4,4'-isopropylidene diphenol C12-15 alcohol phosphite, bis(diisodecyl)pentaerythritol diphosphite, bis(tridecyl)pentaerythritol diphosphite, bis(octadecyl)pentaerythritol diphosphite, bis(nonylphenyl)pentaerythritol diphosphite, bis(2,4-di-*tert*-butylphenyl)pentaerythritol diphosphite, bis(2,4,6-tri-*tert*-butylphenyl)pentaerythritol diphosphite, bis(2,6-di-*tert*-butyl-4-methylphenyl)pentaerythritol diphosphite, and bis(2,4-dicumylphenyl)pentaerythritol diphosphite.

Examples of the sulfur-based antioxidant include tetrakis[methylene-3-(laurylthio)propionate]methane, bis(methyl-4-[3-*n*-alkyl(C12/C14)thiopropionyloxy]-5-*tert-*butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-*tert*-butyl-*m*-cresol), 2,2'-thiobis(6-*tert*-butyl-p*-*cresol), distearyl disulfide.

Examples of the above-described other antioxidant include: nitrone compounds, such as *N*-benzyl-*α*-phenyl nitrone, *N*-ethyl-*α*-methyl nitrone, *N*-octyl-*α*-heptyl nitrone, *N*-lauryl-α-undecyl nitrone, *N*-tetradecyl-*α*-tridecyl nitrone, *N*-hexadecyl-*α*-pentadecyl nitrone, *N*-octyl-*α*-heptadecyl nitrone, *N*-hexadecyl-*α*-heptadecyl nitrone, *N*-octadecyl-*α*-pentadecyl nitrone, *N*-heptadecyl-*α*-heptadecyl nitrone, and *N*-octadecyl-*α*-heptadecyl nitrone; and benzofuran compounds, such as 3-arylbenzofuran-2(3*H*)-one, 3-(alkoxyphenyl)benzofuran-2-one, 3-(acyloxyphenyl)benzofuran-2(3*H*)-one, 5,7-di-*tert*-butyl-3-(3,4-dimethylphenyl)-benzofuran-2(3*H*)-one, 5,7-di-*tert*-butyl-3-(4-hydroxyphenyl)-benzofuran-2(3*H*)-one, 5,7-di-*tert*-butyl-3-{4-(2-hydroxyethoxy)phenyl}-benzofuran-2(3*H*)-one, 6-(2-(4-(5,7-di-*tert*-2-oxo-2,3-dihydrobenzofuran-3-yl)phenoxy)ethoxy)-6-oxohexyl-6-((6-hydroxyhexanoyl)oxy)hexanoate, and 5-di-*tert*-butyl-3-(4-((15-hydroxy-3,6,9,13-tetraoxapentadecyl)oxy)phenyl)benzofuran-2(3*H*)-one.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)-di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensates, 1,6-bis(2,2,6,6-tetramethyl-4-piperidylamino)hexane/2,4-dichloro-6-morpholino-*s*-triazine polycondensates, 1,6-bis(2,2,6,6-tetramethyl-4-piperidylamino)hexane/2,4-dichloro-6-*tert*-octylamino-*s*-triazine polycondensate, 1,5,8,12-tetrakis[2,4-bis(*N*-butyl-*N*-(2,2,6,6-tetramethyl-4-piperidyl)amino)-*s*-triazine-6-yl]-1,5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl]-1,5,8,12-tetraazadodecane, 1,6,11-tris[2,4-bis(*N*-butyl-*N-*(2,2,6,6-tetramethyl-4-piperidyl)amino)-*s*-triazine-6-ylamino]undecane, 1,6,11-tris[2,4-bis(*N-*butyl-*N*-(1,2,2,6,6-pentamethyl-4-piperidyl)amino)-*s*-triazine-6-ylamino]undecane, 3,9-bis[1,1-dimethyl-2-{tris(2,2,6,6-tetramethyl-4-piperidyloxycarbonyl)butylcarbonyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy}ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate.

Examples of the ultraviolet absorber include; 2-hydroxybenzophenones, such as 2,4-dihydroxybenzophenone and 5,5'-methylene-bis(2-hydroxy-4-methoxybenzophenone); 2-(2-hydroxyphenyl)benzotriazoles, such as 2-(2-hydroxy-5-methylphenyl)benzotriazole, 2-(2-hydroxy-5-*tert*-octylphenyl)benzotriazole, 2-(2-hydroxy-3,5-di-*tert*-butylphenyl)-5-chlorobenzotriazole, 2-(2-hydroxy-3-*tert*-butyl-5-methylphenyl)-5-chlorobenzotriazole, 2-(2-hydroxy-3,5-dicumylphenyl)benzotriazole, 2,2'-methylene-bis(4-*tert*-octyl-6-benzotriazolyl phenol), polyethylene glycol esters of 2-(2-hydroxy-3-*tert*-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-*tert-*butylphenyl]benzotriazole, 2-[2-hydroxy-3-(2-methacryloyloxyethyl)-5-*tert-*octylphenyl]benzotriazole, 2-[2-hydroxy-3-(2-methacryloyloxyethyl)-5-*tert*-butylphenyl]-5-chlorobenzotriazole, 2-[2-hydroxy-5-(2-methacryloyloxyethyl)phenyl]benzotriazole, 2-[2-hydroxy-3-*tert*-butyl-5-(2-methacryloyloxyethyl)phenyl]benzotriazole, 2-[2-hydroxy-3-*tert-*amyl-5-(2-methacryloyloxyethyl)phenyl]benzotriazole, 2-[2-hydroxy-3-*tert*-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole, and 2-[2-hydroxy-4-(3-methacryloyloxypropyl)phenyl]benzotriazole; benzoates, such as phenyl salicylate, resorcinol monobenzoate, 2,4-di-*tert*-butylphenyl-3,5-di-*tert*-butyl-4-hydroxybenzoate, octyl(3,5-di-*tert-*butyl-4-hydroxy)benzoate, dodecyl(3,5-di-*tert*-butyl-4-hydroxy)benzoate, tetradecyl(3,5-di-*tert*-butyl-4-hydroxy)benzoate, hexadecyl(3,5-di-*tert*-butyl-4-hydroxy)benzoate, octadecyl(3,5-di-*tert*-butyl-4-hydroxy)benzoate, and behenyl(3,5-di-*tert*-butyl-4-hydroxy)benzoate; substituted oxanilides, such as 2-ethyl-2'-ethoxyoxanilide and 2-ethoxy-4'-dodecyloxanilide; cyanoacrylates, such as ethyl-*α*-cyano-*β*,*β*-diphenyl acrylate and methyl-2-cyano-3-methyl-3-(*p*-methoxyphenyl)acrylate; triazines, such as 2-(4,6-diphenyl-1,3,5-triazine-2-yl)-5-hexyloxyphenol, 2-(2-hydroxy-4-octoxyphenyl)-4,6-bis(2,4-dimethylphenyl)-1,3,5-triazine, trioctyl-2,2',2"-((1,3,5-triazine-2,4,6-triyl)tris(3-hydroxybenzene-4-,1-diyl)tripropionate), 2-(4,6-diphenyl-1,3,5-triazine-2-yl)-5-[2-(2-ethylhexanoyloxy)ethoxy]phenol, 2,4,6-tris(2-hydroxy-4-hexyloxy-3-methylphenyl)-1,3,5-triazine, and 1,12-bis[2-[4-(4,6-diphenyl-1,3,5-triazine-2-yl)-3-hydroxyphenoxy]ethyl]dodecane dioate; and a variety of metal salts and metal chelates, particularly salts and chelates of nickel and chromium.

Examples of the flame retardant include: aromatic phosphates, such as triphenyl phosphate, tricresyl phosphate, trixylenyl phosphate, cresyl diphenyl phosphate, cresyl-2,6-dixylenyl phosphate, resorcinol-bis(diphenyl phosphate), (1-methylethylidene)-4,1-phenylene tetraphenyl diphosphate, and 1,3-phenylene-tetrakis(2,6-dimethylphenyl)phosphate, as well as "ADK STAB FP-500", "ADK STAB FP-600" and "ADK STAB FP-800" (trade names, manufactured by ADEKA Corporation); phosphonates, such as divinyl phenylphosphonate, diallyl phenylphosphonate, and (1-butenyl) phenylphosphonate; phosphinates, such as phenyl diphenylphosphinate, methyl diphenylphosphinate, and 9,10-dihydro-9-oxa-10-phosphaphenanthlene-10-oxide derivatives; phosphazene compounds, such as bis(2-allylphenoxy)phosphazene and dicresyl phosphazene; phosphorus-based flame retardants, such as melamine phosphate, melamine pyrophosphate, melamine polyphosphate, melam polyphosphate, ammonium polyphosphate, piperazine phosphate, piperazine pyrophosphate, piperazine polyphosphate, phosphorus-containing vinylbenzyl compounds, and red phosphorus; metal hydroxides, such as magnesium hydroxide and aluminum hydroxide; and bromine-based flame retardants, such as brominated bisphenol A-type epoxy resins, brominated phenol novolac-type epoxy resins, hexabromobenzene, pentabromotoluene, ethylene-bis(pentabromophenyl), ethylene-bis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromobisphenol A-type dimethacrylate, pentabromobenzyl acrylate, and brominated styrene. These flame retardants are preferably used in combination with a drip inhibitor such as a fluorocarbon resin, and/or a flame retardant aid such as a polyhydric alcohol or a hydrotalcite.

Examples of the lubricant include: unsaturated fatty acid amides, such as oleic acid amide and erucic acid amide; saturated fatty acid amides, such as behenic acid amide and stearic acid amide; butyl stearate; stearyl alcohol; stearic acid monoglyceride; sorbitan monopalmitate; sorbitan monostearate; mannitol; stearic acid; hardened castor oil; stearic acid amide; oleic acid amide; and ethylene-bis stearic acid amide.

Examples of the filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fibers, clays, dolomite, silica, alumina, potassium titanate whiskers, wollastonite, and fibrous magnesium oxysulfate, and any of these fillers can be used by appropriately selecting the particle size (the fiber diameter, the fiber length, and the aspect ratio in the case of a fibrous filler). Among these fillers, talc is particularly preferably used since it has an excellent effect of imparting rigidity and can be easily obtained. Further, the filler to be used may be subjected to a surface treatment as required.

Examples of the hydrotalcite include complex salt compounds that are known as natural or synthetic products and each composed of magnesium, aluminum, hydroxy groups, a carbonate group and arbitrary crystal water, in which some of the magnesium or aluminum atoms are substituted with other metal such as an alkali metal or zinc, or the hydroxy group(s) and/or carbonate group is/are substituted with other anionic group(s). In these hydrotalcites, the crystal water may be dehydrated, and the hydrotalcites may be coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax. The hydrotalcites may be naturally-occurring or synthetic hydrotalcites. Examples of a synthesis method thereof include known methods that are described in JPS46-2280B, JPS50-30039B1, JPS51-29129B1, JPH03-36839B2, JPS61-174270A, JPH05-179052A, and the like. Further, the above-exemplified hydrotalcites can be used without any limitation in terms of their crystal structures, crystal particles, and the like.

Examples of the antistatic agent include low-molecular-weight antistatic agents based on nonionic, anionic, cationic, or amphoteric surfactants, and high-molecular-weight antistatic agents based on polymer compounds. Examples of the nonionic surfactants include: polyethylene glycol-type nonionic surfactants, such as higher alcohol ethylene oxide adducts, fatty acid ethylene oxide adducts, higher alkylamine ethylene oxide adducts, and polyolefin glycol ethylene oxide adducts; and polyhydric alcohol-type nonionic surfactants, such as polyethylene oxides, glycerin fatty acid esters, pentaerythritol fatty acid esters, sorbitol or sorbitan fatty acid esters, polyhydric alcohol alkyl ethers, and alkanolamine aliphatic amides. Examples of the anionic surfactants include: carboxylates, such as alkali metal salts of higher fatty acids; sulfates, such as higher alcohol sulfates and higher alkyl ether sulfates; sulfonates, such as alkylbenzene sulfonates, alkyl sulfonates, and paraffin sulfonates; and phosphates such as higher alcohol phosphates, and examples of the cationic surfactants include quaternary ammonium salts, such as alkyltrimethyl ammonium salts. Examples of the amphoteric surfactants include: amino acid-type amphoteric surfactants, such as higher alkyl aminopropionates; and betaine-type amphoteric surfactants, such as higher alkyl dimethylbetaines and higher alkyl dihydroxyethylbetaines. Among these surfactants, an anionic surfactant is preferred, and a sulfonate such as an alkylbenzene sulfonate, an alkyl sulfonate, or a paraffin sulfonate is particularly preferred.

Examples of the high-molecular-weight antistatic agents include ionomers, and block polymers containing a polyethylene glycol as a hydrophilic moiety. Examples of the ionomers include the ionomer disclosed in JP2010-132927A. Examples of the polymers containing a polyethylene glycol as a hydrophilic moiety include the polyether ester amide disclosed in JPH07-10989A, the polymer disclosed in US6552131B1 which is composed of a polyolefin and a polyethylene glycol, and the polymer disclosed in JP2016-023254A which is composed of a polyester and a polyethylene glycol.

The fluorescent brightener is a compound which enhances the whiteness or blueness of a molded article by a fluorescent action of absorbing ultraviolet rays of solar light and artificial light, converting the absorbed ultraviolet rays into visible light of purple to blue, and radiating the visible light. Examples of the fluorescent brightener include C.I. Fluorescent Brightener 184, which is a benzoxazole-based compound; C.I. Fluorescent Brightener 52, which is a coumarin-based compound; and C.I. Fluorescent Brighteners 24, 85 and 71, which are diaminostilbene disulfonic acid-based compounds.

The pigment is not particularly limited, and any commercially available pigment can be used. Specific examples of the pigment include PIGMENT RED 1, 2, 3, 9, 10, 17, 22, 23, 31, 38, 41, 48, 49, 88, 90, 97, 112, 119, 122, 123, 144, 149, 166, 168, 169, 170, 171, 177, 179, 180, 184, 185, 192, 200, 202, 209, 215, 216, 217, 220, 223, 224, 226, 227, 228, 240, and 254; PIGMENT ORANGE 13, 31, 34, 36, 38, 43, 46, 48, 49, 51, 52, 55, 59, 60, 61, 62, 64, 65, and 71; PIGMENT YELLOW 1, 3, 12, 13, 14, 16, 17, 20, 24, 55, 60, 73, 81, 83, 86, 93, 95, 97, 98, 100, 109, 110, 113, 114, 117, 120, 125, 126, 127, 129, 137, 138, 139, 147, 148, 150, 151, 152, 153, 154, 166, 168, 175, 180, and 185; PIGMENT GREEN 7, 10, and 36; PIGMENT BLUE 15, 15:1, 15:2, 15:3, 15:4, 15:5, 15:6, 22, 24, 29, 56, 60, 61, 62, and 64; and PIGMENT VIOLET 1, 15, 19, 23, 27, 29, 30, 32, 37, 40, and 50.

Examples of the dye include azo dyes, anthraquinone dyes, indigoid dyes, triarylmethane dyes, xanthene dyes, alizarin dyes, acridine dyes, stilbene dyes, thiazole dyes, naphthol dyes, quinoline dyes, nitro dyes, indamine dyes, oxazine dyes, phthalocyanine dyes, and cyanine dyes.

The nucleating agent according to the present embodiment may be a one-pack composite additive obtained by further incorporating a granulation aid such as a binder, a wax, a solvent, or silica, and subsequently granulating the resultant. The nucleating agent according to the present embodiment may also be a masterbatch further containing a polyolefin-based resin.

Examples of the polyolefin-based resin contained in the masterbatch include: polyethylene-based resins, such as low-density polyethylenes, linear low-density polyethylenes, high-density polyethylenes, cross-linked polyethylenes, and ultrahigh-molecular-weight polyethylenes; polypropylene-based resins, such as homopolypropylenes, random copolymer polypropylenes, block copolymer polypropylenes, impact copolymer polypropylenes, high-impact copolymer polypropylenes, and maleic anhydride-modified polypropylenes; *α*-olefin polymers, such as polybutene-1, cycloolefin polymers, poly-3-methyl-1-butenes, poly-3-methyl-1-pentenes, and poly-4-methyl-1-pentenes; and *α*-olefin copolymers, such as ethylene-methyl methacrylate copolymers and ethylene-vinyl acetate copolymers. These polyolefin-based resins may be used singly, or in combination of two or more thereof. Further, these polyolefin-based resins may be alloyed as well. The molecular weight, the polymerization degree, the density, the softening point, the insoluble component-to-solvent ratio, the degree of stereoregularity, the presence or absence of a catalyst residue, the type and the blend ratio of each monomer used as a raw material, the type of a catalyst used for polymerization (e.g., a Ziegler catalyst or a metallocene catalyst), and the like of the polyolefin-based resin are not particularly limited, and are selected as appropriate.

The polyolefin-based resin contained in the masterbatch is particularly preferably a polypropylene-based resin.

When the nucleating agent is a masterbatch containing a polyolefin-based resin, the content of the polyolefin-based resin in the masterbatch may be, for example, 90% by mass or less, and it is preferably 80% by mass or less, more preferably 60% by mass or less. Meanwhile, the content of the polyolefin-based resin in the masterbatch may be, for example, 20% by mass or more.

Next, an embodiment of the resin composition of the present invention will be described.

### <Resin Composition>

The resin composition according to the present embodiment contains: a polyolefin-based resin; (A) an aromatic phosphate metal salt having a structure represented by the above-described Formula (1); and (B) a carboxylic acid metal salt having a structure represented by the above-described Formula (2). In the resin composition according to the present embodiment, a total content of the (A) aromatic phosphate metal salt and the (B) carboxylic acid metal salt is 0.001 to 10 parts by mass with respect to 100 parts by mass of the polyolefin-based resin.

Alternatively, the resin composition according to the present embodiment may contain a polyolefin-based resin and the above-described nucleating agent. In this case, the content of the nucleating agent is 0.001 to 10 parts by mass with respect to 100 parts by mass of the polyolefin-based resin.

A molded article obtained by molding the resin composition according to the present embodiment has excellent mechanical properties.

The polyolefin-based resin contained in the resin composition according to the present embodiment may be the same polyolefin-based resin as the one contained in the above-described masterbatch. Among the above-exemplified polyolefin-based resins, a polypropylene-based resin is preferred as the polyolefin-based resin contained in the resin composition. In this case, a molded article obtained by molding the resin composition has not only excellent mechanical properties but also excellent heat resistance.

As described above, a total content of the (A) aromatic phosphate metal salt and the (B) carboxylic acid metal salt, or the content of the nucleating agent is 0.001 to 10 parts by mass with respect to 100 parts by mass of the polyolefin-based resin. When the total content of the (A) aromatic phosphate metal salt and the (B) carboxylic acid metal salt, or the content of the nucleating agent is less than 0.001 parts by mass with respect to 100 parts by mass of the polyolefin-based resin, a molded article obtained by molding the resin composition does not have sufficient mechanical properties. Meanwhile, when the total content of the (A) aromatic phosphate metal salt and the (B) carboxylic acid metal salt, or the content of the nucleating agent is greater than 10 parts by mass with respect to 100 parts by mass of the polyolefin-based resin, blooming from the surface of the molded article may occur, and/or migration of the (A) aromatic phosphate metal salt, the (B) carboxylic acid metal salt, or the nucleating agent from the molded article to the outside may occur.

From the standpoint of imparting superior mechanical properties to a molded article obtained by molding the resin composition and sufficiently inhibiting the occurrence of blooming from the molded article as well as the migration of the (A) aromatic phosphate metal salt, the (B) carboxylic acid metal salt, or the nucleating agent, the total content of the (A) aromatic phosphate metal salt and the (B) carboxylic acid metal salt, or the content of the nucleating agent is more preferably 0.01 to 1 part by mass, still more preferably 0.02 to 0.2 parts by mass, with respect to 100 parts by mass of the polyolefin-based resin.

The content of the (A) aromatic phosphate metal salt with respect to 100 parts by mass of the polyolefin-based resin is not particularly limited and may be, for example, 0.0005 to 9.9995 parts by mass, and it is preferably 0.001 to 5 parts by mass, more preferably 0.01 to 1 part by mass, still more preferably 0.02 to 0.2 parts by mass. Further, the content of the (B) carboxylic acid metal salt with respect to 100 parts by mass of the polyolefin-based resin is not particularly limited and may be, for example, 0.0005 to 9.9995 parts by mass, and it is preferably 0.001 to 5 parts by mass, more preferably 0.01 to 1 part by mass, still more preferably 0.02 to 0.2 parts by mass.

In the resin composition according to the present embodiment, a mass ratio (A)/(B) between the content of the (A) aromatic phosphate metal salt and the content of the (B) carboxylic acid metal salt may be, for example, 1/99 to 99/1. The mass ratio (A)/(B) is preferably 1/99 to 50/50. In this case, the resin composition can impart excellent impact resistance to a molded article. From the standpoint of obtaining a molded article that has not only excellent impact resistance but also sufficient rigidity, the mass ratio (A)/(B) is more preferably 1/99 to 20/80, still more preferably 4/96 to 20/80, yet still more preferably 4/96 to 16/84.

Further, in the resin composition according to the present embodiment, the mass ratio (A)/(B) is also preferably 50/50 to 99/1. In this case, the resin composition can impart a superior rigidity to a molded article. From the standpoint of imparting a superior rigidity to a molded article, the mass ratio (A)/(B) is more preferably 50/50 to 96/4, still more preferably 50/50 to 84/16, yet still more preferably 50/50 to 80/20, particularly preferably 60/40 to 80/20.

The resin composition according to the present embodiment may further contain (C) a fatty acid metal salt. In this case, the dispersibility of the (A) aromatic phosphate metal salt and the (B) carboxylic acid metal salt is improved, so that the resin composition can impart superior mechanical properties to a molded article.

As the (C) fatty acid metal salt, the same ones as those exemplified above for the nucleating agent can be used.

When the resin composition according to the present embodiment contains the (C) fatty acid metal salt, the content of the (C) fatty acid metal salt may be, for example, 10 to 150 parts by mass with respect to a total of 100 parts by mass of the content of the (A) aromatic phosphate metal salt and the content of the (B) carboxylic acid metal salt, and it is preferably 30 to 120 parts by mass, more preferably 50 to 100 parts by mass.

Further, when the resin composition according to the present embodiment contains the (C) fatty acid metal salt, the content of the (C) fatty acid metal salt with respect to 100 parts by mass of the polyolefin-based resin is not particularly limited and may be, for example, 0.001 to 10 parts by mass, and it is preferably 0.01 to 1 part by mass, more preferably 0.02 to 0.2 parts by mass.

The resin composition according to the present embodiment preferably further contain a filler. In this case, a molded article obtained by molding the resin composition is provided with a superior rigidity. Examples of the filler include the same ones as those exemplified above as the filler that may be contained in the nucleating agent. Among such fillers, talc is particularly preferred from the standpoint of obtaining a molded article having a superior rigidity. The amount of the filler contained in the resin composition may be, for example, 0.01 to 80 parts by mass with respect to 100 parts by mass of the polyolefin-based resin, and it is preferably 1 to 50 parts by mass.

The resin composition according to the present embodiment may further contain, as required, various additives such as a compound that is different from the (A) aromatic phosphate metal salt and the (B) carboxylic acid metal salt and has a function of facilitating the crystallization of the polyolefin-based resin, a phenolic antioxidant, a phosphorus-based antioxidant, a sulfur-based antioxidant, other antioxidant, a hindered amine compound, an ultraviolet absorber, a flame retardant, a flame retardant aid, a lubricant, a filler, a hydrotalcite, an antistatic agent, a fluorescent brightener, a pigment, and a dye. Examples of these various additives include the same ones as those exemplified above as the additives that may be contained in the nucleating agent.

Next, an embodiment of the method of producing a resin composition according to the present invention will be described.

### <Method of Producing Resin Composition>

The method of producing a resin composition according to the present embodiment includes a blending step of blending the above-described nucleating agent into a polyolefin-based resin.

A molded article obtained by molding a resin composition produced by the production method according to the present embodiment has excellent mechanical properties.

### (Preparation Step)

In the production method according to the present embodiment, first, the above-described polyolefin-based resin and the above-described nucleating agent are prepared.

### (Blending Step)

Next, the nucleating agent is blended into the polyolefin-based resin. The blending method is not particularly limited and, for example, a method of adding the polyolefin-based resin, the nucleating agent and, as required, the above-described various additives, and subsequently mixing these materials using a mixing apparatus such as a Henschel mixer, a mill roll, a Banbury mixer, or a super mixer may be employed. In this process, the nucleating agent and at least one component of the above-described various additives may be added before or during polymerization of a polyolefin-based resin monomer or oligomer, and the remaining components may be added to the resulting polymer.

Alternatively, in the method of producing a resin composition according to the present embodiment, the (A) an aromatic phosphate metal salt, the (B) carboxylic acid metal salt and, as required, various additives may be blended into the polyolefin-based resin in an appropriate order. In this case, the preparation step and the blending step can be carried out in the same manner as described above in the paragraphs of (Preparation Step) and (Blending Step).

A resin composition is produced in the above-described manner. The method of producing a resin composition may further include the melt-kneading step of melt-kneading a mixture obtained by the above-described method using a melt-kneading apparatus, such as a single-screw extruder or a twin-screw extruder. The melt-kneading temperature may be, for example, 160 to 260°C. Further, the method of producing a resin composition may include the granulation step of granulating a kneaded product obtained by the melt-kneading. A granulation method is not particularly limited and, for example, a method using a granulation apparatus such as a pelletizer may be employed. The shape of the resin composition obtained by the granulation is not particularly limited, and the resin composition may be, for example, in a pellet form.

Next, an embodiment of the molded article of the present invention will be described.

### <Molded Article>

The molded article according to the present embodiment is obtained by molding the above-described resin composition. This molded article has excellent mechanical properties.

Examples of the molded article according to the present embodiment include injection-molded articles, fibers, flat yarns, biaxially stretched films, uniaxially stretched films, unstretched films, sheets, thermoformed articles, extrusion blow-molded articles, injection blow-molded articles, injection stretch blow-molded articles, profile extrusion-molded articles, and rotationally molded articles, more specifically automotive exterior components, automotive interior components, housings, containers, and pipes. Examples of the automotive exterior components include bumpers, radiator grilles, front grilles, front panels, fenders, pillars, pillar covers, door mirror stay covers, glass run channels, door mirror housings, lamp housings, wheel covers, spoilers, air spoilers, weather-strips, window moldings, belt moldings, sunroofs, front-end modules, door modules, back door modules, and outer plates, and examples of the automotive interior components include instrument panels, door trim panels, pillar trims, door trims, pillar garnishes, package trays, rear trays, console boxes, and air-conditioning ducts. Examples of the housings include housings for home electric appliances, housings for arcade gaming machines, housings for home-use gaming machines, housings for portable gaming machines, housings for cameras, housings for cellular phones, housings for smartphones, housings for electronic devices, housings for secondary batteries, and housings for safety breakers, and examples of the containers include: tableware; food containers, such as precooked food containers, frozen food containers, microwavable heat-resistant containers, frozen storage containers, retort containers, cups, and frozen dessert cups; bottle containers, such as beverage bottles, infusion bottles, and medical hollow bottles; containers for physicochemical tests, such as beakers and graduated cylinders; chemical containers; medical containers; detergent containers; cosmetic containers; perfume containers; and toner containers. Examples of the pipes include various pipes, such as infrastructure pipes (e.g., water pipes and gas pipes), plant utility pipes, vehicle fuel delivery pipes, and vehicle air intake pipes; various tubes, such as cosmetic/perfume spray tubes, medical tubes, and infusion tubes; various hoses, such as water hoses and vehicle air duct hoses.

A method of molding the molded article according to the present embodiment is not particularly limited, and examples thereof include injection molding, extrusion molding, blow molding, rotational molding, vacuum molding, inflation molding, calender molding, slush molding, dip molding, and thermoform molding.

### EXAMPLES

The present invention will now be described more concretely by way of Examples thereof; however, the present invention is not limited to the following Examples and the like by any means.

The polyolefin-based resin, (A) aromatic phosphate metal salts, (B) carboxylic acid metal salts, and (C) fatty acid metal salts that were used in Examples are as follows.

### <Polyolefin-Based Resin>

(PO-1) homopolypropylene (melt flow rate measured at a cylinder temperature of 230°C and a load of 2.16 kg: 8 g/10 min)

### <(A) Aromatic Phosphate Metal Salts>

(A-1) sodium 2,2'-methylene-bis(4,6-di-tert-butylphenyl)phosphate
(A-2) hydroxyaluminum bis[2,2'-methylene-bis(4,6-di-tert-butylphenyl)phosphate]
(A-3) lithium 2,2'-methylene-bis(4,6-di-tert-butylphenyl)phosphate

### <(B) Carboxylic Acid Metal Salts>

(B-1) disodium N-benzoyl-L-aspartate
(B-2) disodium N-cyclohexylcarbonyl-L-aspartate
(B-3) disodium N-(4-methylbenzoyl)-L-aspartate
(B-4) aluminum hydroxide N-(2,4,6-trimethylbenzoyl)-L-aspartate

### <(C) Fatty Acid Metal Salts>

(C-1) calcium stearate
(C-2) lithium myristate

### <Preparation of Resin Compositions>

With respect to 100 parts by mass of the polyolefin-based resin, (A) an aromatic phosphate metal salt, (B) a carboxylic acid metal salt, and (C) a fatty acid metal salt were added in the respective amounts shown in Tables 1 to 5 below, and 0.05 parts by mass of a phenolic antioxidant (tetrakis[methylene-3-(3',5'-*tert*-butyl-4'-hydroxyphenyl)propionate]methane) and 0.1 parts by mass of a phosphorus-based antioxidant (tris(2,4-di-*tert*-butylphenyl)phosphite) were further added, after which the resultant was mixed for 1 minute at a rotation speed of 1,000 rpm using a Henschel mixer (FM200, manufactured by Mitsui Mining Co., Ltd.). The thus obtained mixture was melt-kneaded using a twin-screw extruder (TEX-28V, manufactured by The Japan Steel Works, Ltd.) at a resin temperature of 220°C and a screw speed of 150 rpm, and subsequently granulated to obtain pellets of Examples 1 to 20 and Comparative Examples 1 and 2. The thus obtained pellets were dried at 80°C for 8 hours and then used for evaluation of properties. It is noted here that, in Tables 1 to 5 below, the unit of amount is parts by mass.

### <Evaluation of Properties>

The mechanical properties of molded articles obtained by molding the respective pellets of Examples 1 to 20 and Comparative Examples 1 and 2 were evaluated by measuring the flexural modulus and the impact strength in accordance with the below-described methods.

### (Flexural Modulus)

The pellets of Examples 1 to 20 and Comparative Examples 1 and 2 were dried at 80°C for 8 hours and then injection-molded using an injection molding machine (EC-220, manufactured by Toshiba Machine Co., Ltd.) at a resin temperature of 230°C and a mold temperature of 40°C to prepare bending test pieces of 80 mm × 10 mm × 4 mm in size. The thus obtained test pieces were left to stand for 48 hours in an incubator at temperature of 23°C and a humidity of 50% and subsequently taken out of the incubator, after which the flexural modulus (MPa) of each test piece was measured in accordance with ISO178 using a bending tester (AG-IS, manufactured by Shimadzu Corporation). The results thereof are shown in Tables 1 to 5 below.

### (Impact Strength)

The pellets of Examples 1 to 20 and Comparative Examples 1 and 2 were dried at 80°C for 8 hours and then molded using an injection molding machine (horizontal injection molding machine NEX80, manufactured by Nissei Plastic Industrial Co., Ltd.) at a resin temperature of 230°C and a mold temperature of 40°C to prepare test pieces for measurement of Charpy impact strength, which had a size of 80 mm × 10 mm × 4 mm and a V-shaped notch in the central part. The thus obtained test pieces were left to stand for 7 days in an incubator at temperature of 23°C and a humidity of 60% and subsequently taken out of the incubator, after which the Charpy impact strength (kJ/m²) of each test piece was measured in accordance with ISO179-1. The results thereof are shown in Tables 1 to 5 below as "Impact strength (kJ/m²)".

**[Table 1]**

| | | | Example 1 | Example 2 | Example 3 | Example 4 | Example 5 | Example 6 |
|---|---|---|---|---|---|---|---|---|
| Polyolefin-based resin | | (PO-1) | 100 | 100 | 100 | 100 | 100 | 100 |
| (A) aromatic phosphate metal salt | | (A-1) | 0.04 | 0.025 | 0.01 | 0.008 | 0.0025 | 0.002 |
| (B) carboxylic acid metal salt | | (B-1) | 0.01 | 0.025 | 0.04 | 0.042 | 0.0475 | 0.048 |
| (C) fatty acid metal salt | | (C-1) | 0.05 | 0.05 | 0.05 | 0.05 | 0.05 | 0.05 |
| Mechanical properties | Flexural modulus (MPa) | | 2,130 | 2,030 | 1,980 | 1,940 | 1,880 | 1,830 |
| | Impact strength kJ/m²) | | 2.1 | 3.2 | 3.5 | 3.7 | 4.2 | 4.9 |

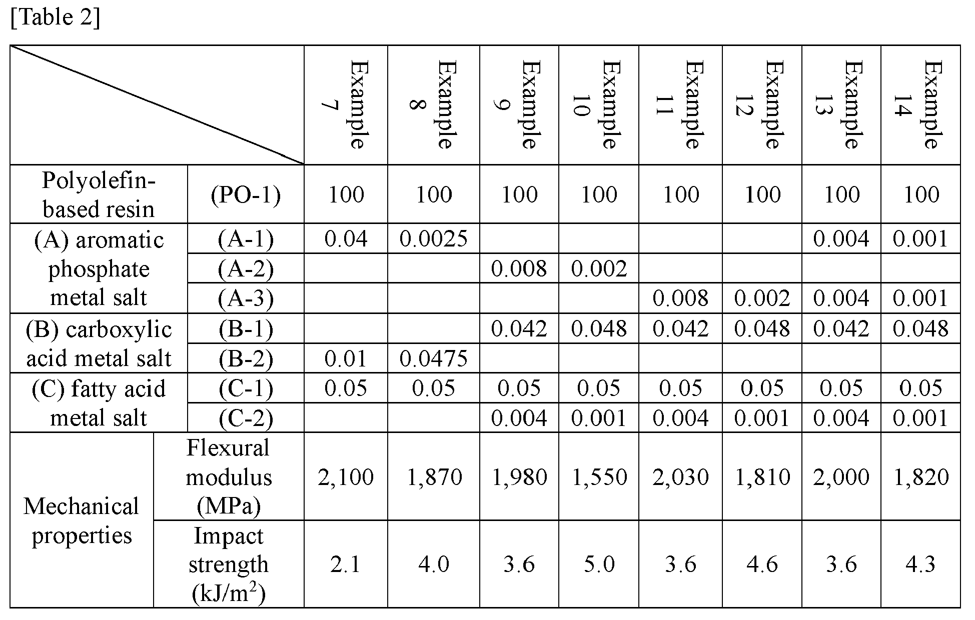

**[Table 3]**

| | | | Comparative Example 1 | Comparative Example 2 |
|---|---|---|---|---|
| Polyolefin-based resin | | (PO-1) | 100 | 100 |
| (A) aromatic phosphate metal salt | | (A-1) | | 0.05 |
| (B) *carboxylic acid metal salt* | | (B-1) | | |
| | | (B-2) | | |
| (C) fatty acid metal salt | | (C-1) | 0.05 | 0.05 |
| Mechanical properties | Flexural modulus (MPa) | | 1,450 | 1,910 |
| | Impact strength (kJ/m²) | | 2.8 | 2.9 |

**[Table 4]**

| | | | Example 15 | Example 16 | Example 17 |
|---|---|---|---|---|---|
| Polyolefin-based resin | | (PO-1) | 100 | 100 | 100 |
| (A) aromatic phosphate metal salt | | (A-1) | 0.048 | 0.0475 | 0.042 |
| (B) carboxylic acid metal salt | | (B-1) | 0.002 | 0.0025 | 0.008 |
| (C) fatty acid metal salt | | (C-1) | 0.05 | 0.05 | 0.05 |
| Mechanical properties | Flexural modulus (MPa) | | 2,050 | 2,080 | 2,140 |
| | Impact strength (kJ/m²) | | 2.5 | 2.3 | 2.1 |

**[Table 5]**

| | | | Example 18 | Example 19 | Example 20 |
|---|---|---|---|---|---|
| Polyolefin-based resin | | (PO-1) | 100 | 100 | 100 |
| (A) aromatic phosphate metal salt | | (A-1) | 0.005 | 0.0025 | 0.005 |
| (B) carboxylic acid metal salt | | (B-3) | 0.045 | 0.0475 | |
| | | (B-4) | | | 0.045 |
| (C) fatty acid metal salt | | (C-1) | 0.05 | 0.05 | 0.05 |
| Mechanical properties | Flexural modulus (MPa) | | 1,768 | 1,735 | 1,556 |
| | Impact strength (kJ/m²) | | 3.6 | 3.8 | 3.9 |

According to the results shown in Tables 1 to 5 above, as compared to the molded article obtained by molding the pellet of Comparative Example 2 that contained (A) an aromatic phosphate metal salt but not (B) a carboxylic acid metal salt, those molded articles obtained by molding the pellets of Examples 1 to 20, in which a nucleating agent containing (A) an aromatic phosphate metal salt and (B) a carboxylic acid metal salt each having a specific structure was used, had not only equivalent or superior rigidity but also superior impact resistance.

From the above, it was confirmed that excellent mechanical properties can be imparted to a molded article by using a nucleating agent that contains (A) an aromatic phosphate metal salt and (B) a carboxylic acid metal salt each having a specific structure.

## Claims

1. A nucleating agent, comprising:
(A) an aromatic phosphate metal salt having a structure represented by the following Formula (1): 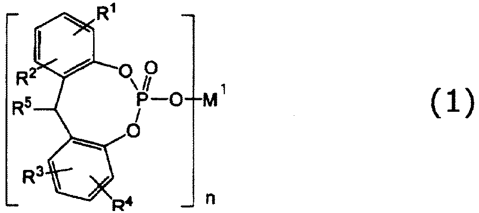 (wherein, R¹ to R⁵ each independently represent a hydrogen atom or an alkyl group having 1 to 6 carbon atoms; n represents 1 or 2; when n is 1, M¹ represents an alkali metal or dihydroxyaluminum; and when n is 2, M¹ represents an alkaline earth metal, zinc, or hydroxyaluminum); and
(B) a carboxylic acid metal salt having a structure represented by the following Formula (2): 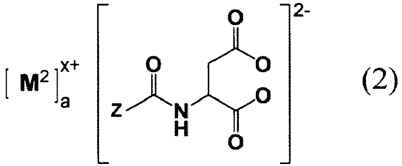 (wherein, M² represents an alkali metal, an alkaline earth metal, hydroxyaluminum, or dihydroxyaluminum; a represents 1 or 2; x represents 1 or 2; a and x satisfy ax = 2; and Z represents a group having a structure represented by the following Formula (3) or (4)) 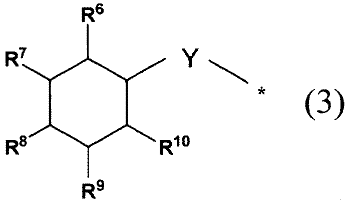 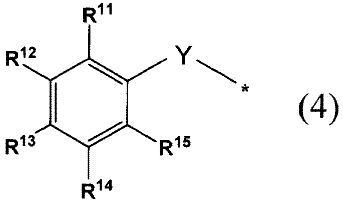 (wherein, Y represents a direct bond or an alkylene group having 1 to 4 carbon atoms; R⁶ to R¹⁵ each independently represent a hydrogen atom, a halogen atom, or an alkyl group having 1 to 6 carbon atoms; and * represents a binding position with a carbonyl carbon atom).

2. The nucleating agent according to claim 1, wherein M² in Formula (2) is sodium.

3. The nucleating agent according to claim 1, wherein a mass ratio (A)/(B) between the content of the (A) aromatic phosphate metal salt and the content of the (B) carboxylic acid metal salt is 1/99 to 50/50.

4. The nucleating agent according to claim 1, wherein a mass ratio (A)/(B) between the content of the (A) aromatic phosphate metal salt and the content of the (B) carboxylic acid metal salt is 50/50 to 99/1.

5. The nucleating agent according to claim 4, wherein the mass ratio (A)/(B) between the content of the (A) aromatic phosphate metal salt and the content of the (B) carboxylic acid metal salt is 50/50 to 80/20.

6. A resin composition, comprising:
a polyolefin-based resin;
(A) an aromatic phosphate metal salt having a structure represented by the following Formula (1): 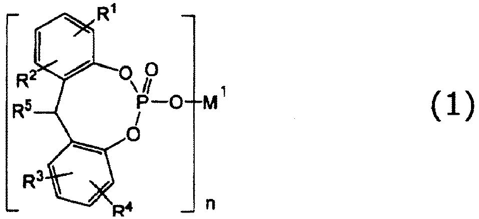 (wherein, R¹ to R⁵ each independently represent a hydrogen atom or an alkyl group having 1 to 6 carbon atoms; n represents 1 or 2; when n is 1, M¹ represents an alkali metal or dihydroxyaluminum; and when n is 2, M¹ represents an alkaline earth metal, zinc, or hydroxyaluminum); and
(B) a carboxylic acid metal salt having a structure represented by the following Formula (2): 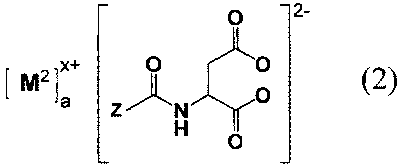 (wherein, M² represents an alkali metal, an alkaline earth metal, hydroxyaluminum, or dihydroxyaluminum; a represents 1 or 2; x represents 1 or 2; a and x satisfy ax = 2; and Z represents a group having a structure represented by the following Formula (3) or (4)) 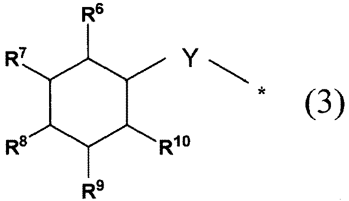 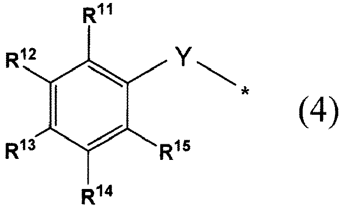 (wherein, Y represents a direct bond or an alkylene group having 1 to 4 carbon atoms; R⁶ to R¹⁵ each independently represent a hydrogen atom, a halogen atom, or an alkyl group having 1 to 6 carbon atoms; and * represents a binding position with a carbonyl carbon atom),
wherein a total content of the (A) aromatic phosphate metal salt and the (B) carboxylic acid metal salt is 0.001 to 10 parts by mass with respect to 100 parts by mass of the polyolefin-based resin.

7. The resin composition according to claim 6, wherein the polyolefin-based resin is a polypropylene-based resin.

8. A method of producing a resin composition comprising a blending step of blending the nucleating agent according to claim 1 into a polyolefin-based resin.

9. A molded article obtained by molding the resin composition according to claim 6.
